# EUROPEAN PATENT APPLICATION

(11) **EP 2 526 775 A1**
(43) Date of publication of application: **28.11.2012**
(21) Application number: 11733016.7
(22) Date of filing: 14.01.2011
(51) Int. Cl.: A21D 8/02, A21D 6/00

(54) **METHOD FOR PRODUCING FROZEN BREAD DOUGH NEEDING NO THAWING OR FERMENTATION STEP**

(30) Priority: 18.01.2010 JP 2010007747
(71) Applicant: Ajinomoto Co., Inc., Tokyo 104-8315 (JP)
(72) Inventor: MASUDA, Yasuyuki, Shimada-shi Shizuoka 427-0101 (JP); KAGA, Chifumi, Shimada-shi Shizuoka 427-0101 (JP); ARIMURA, Toshiaki, Shimada-shi Shizuoka 427-0101 (JP)
(74) Representative: Strehl Schübel-Hopf & Partner
(86) International application number: PCT/JP2011/051040
(87) International publication number: WO 2011/087152

(57) **Abstract**

Provided is shaped frozen bread dough from which a baked bread product having favorable post-baked qualities (taste, texture, flavor, appearance (voluminousness), and the like) can be prepared using a commonly employed baking facility, without requiring a special facility for thawing and fermenting. A bread dough having a continuous, multi-layered structure is prepared by using a cereal flour composition containing yeast and an oil-and-fat composition (roll in oil-and-fat), the bread dough is formed into a desired shape, and then a dent is made on the surface of the thickest portion having the length which is 13% to 70% of the longitudinal length of the shaped article (preferably, the depth of the dent is 33% to 90% of the thickest portion before forming the dent).

## Description

### BACKGROUND OF THE INVENTION

### [Field of the Invention]

The present invention relates to a method for producing frozen bread dough which can be cooked by baking/heating step only, without requiring a thawing or fermentation step.

### [Background Art]

Shaped frozen bread dough is a product developed as a measure for streamlining a producing process or a shortage of professional bakers in a bread-manufacturing site such as a bread factory, a bakery, and the like. Compared to a normal bread-producing method without using the shaped frozen bread dough, the advantages are capabilities of: mass production; long-term storage; efficient production due to a smoothed production schedule; reduction of midnight or early works; saving skilled labor force; reducing losses in production and sales; expanding a delivery range; reducing the number of deliveries, and the like. On the other hand, the disadvantages are: requiring a refrigeration facility or a freeze storage space for producing the shaped frozen bread dough; requiring electric energy for freezing and freeze storage; requiring the thawing step; deteriorating qualities such as loss of aromatic flavor due to the freezing and thawing operations, and the like.

Recently, in response to the demand of users utilizing frozen bread dough for simplifying production steps and shortening producing time, various frozen bread dough products which do not require thawing and fermentation steps have been developed and sold. The production methods of frozen bread dough products which do not require the thawing step and fermentation step are classified mainly into two methods, namely, a method for freezing bread after heating (baking) and a method for freezing dough without heating (baking). The former is called a post-baked frozen bread product and the latter is called a shape-processed frozen bread dough product.

The post-baked frozen bread product, which provides an expanded production form due to a fermentation step and a heating (baking) step, have characteristics of large specific volume of the product and small moisture content compared to the shape-processed frozen bread dough product. For users who utilize the frozen bread dough, the advantage is that a production step is simplified, while problems arise, for example, inefficient storage during distribution and storage and quality deterioration (hard texture and loss of aromatic flavor) accompanying moisture transfer from the product during freeze storage. Since the shape-processed frozen bread dough product has small specific volume of the product, the distribution efficiency and quality stability are high. On the other hand, insufficient expansion at heating (baking) is a problem.

For improving problems of the post-baked frozen bread product, some methods have been provided for improving the quality stability by selecting raw materials to be added, for example, a method wherein gelatin, enzymatically decomposed lecithin, and emulsifying agent are added as part of the raw materials (Patent Document 1), a method wherein pre-gelatinized starch and lipase are added (Patent Document 2), a method wherein a thermo-soluble gelling agent is added(Patent Document 3), and the like. However, no satisfactory effects were obtained and problems arose such as unusual flavor originated from the added raw materials or an increase in cost of the raw materials. For improving problems of the shape-processed frozen bread dough, some methods have been provided for compensating for insufficient expansion at heating (baking) by adding raw materials which improve the dough extensibility and for performing a specific shape processing, for example, a method for processing oil-and-fat folded dough to a 50-layered dough, wherein an oxidizing agent, a gelling agent or a lipolytic enzyme are added as part of the raw materials (Patent Document 4), a method for rolling oil-and-fat folded dough to make a flat form, wherein hydrocolloid and lecithin are added as part of the raw materials (Patent Document 5), and the like. However, problems arose such as unusual flavor (bitter taste or astringent taste) originated from the added raw materials and poor appearance (surface-layer peeling off and collapse of the cross section layer) associated with the shaping processing.

### [Prior Art Documents]

### [Patent Documents]

Patent Document 1: Japanese Patent Laid-Open Publication No. 234938/1992
Patent Document 2: Japanese Patent Laid-Open Publication No. 158731/1992
Patent Document 3: Japanese Patent Laid-Open Publication No. 292872/1993
Patent Document 4: Japanese Patent Laid-Open Publication No. 14693/1994
Patent Document 5: Japanese Patent Publication No. 3107832

### SUMMARY OF THE INVENTION

### [Problems to be Solved by the Invention]

The purpose of the present invention is to provide shaped frozen bread dough capable of obtaining a baked bread product having favorable post-baked qualities (taste, texture, flavor, appearance (voluminousness), and the like) using a general baking facility, without requiring a special facility for thawing and fermentation.

### [Means for Solving the Problems]

Studying compositions and forms of the frozen bread dough, the present inventors found that: heat conduction was improved by forming a continuous, multi-layered structure composed of the bread dough and oil-and-fat and by thinning the dough by forming a dent at the thickest portion thereof; and the shape-processed frozen bread dough having a specific dent on the surface can be cooked only by baking, without requiring thawing time and fermentation time; and thus a bread product having favorable post-baked qualities (taste, texture, flavor, appearance (voluminousness) and the like) can be obtained. Thus the present invention was completed. Namely, the present invention is as follows.

The first invention is a method for producing frozen bread dough, wherein bread dough having a continuous, multi-layered structure is prepared by using a cereal flour composition containing yeast and an oil-and-fat composition (roll in oil-and-fat), the bread dough is shaped into a desired form, and a dent is formed on the surface of the shaped dough.
The second invention is a method for producing the frozen bread dough, wherein the surface of the shaped dough is pressed to form a dent, which length is 13% to 70% of the longitudinal length of the shaped dough.
The third invention is a method for producing the frozen bread dough, wherein the shaped dough has a dent, which depth is 33% to 90% of the thickest portion of the dough before forming the dent.
The fourth invention is a method for producing the frozen bread dough, which is croissant dough.

### [Effect of the Invention]

According to the present invention, a fresh baked bread product can be provided in a short time by using a general baking (heating) facility without using a special facility for thawing and fermentation. The unusual flavor originated from an additive agent can be reduced and the taste and flavor can thus be improved compared to a conventional product. Further, the appearance can be improved without surface-layer peeling off or collapse of the cross-sectional layer compared to a conventional product. In particular, when producing croissant, if the roll-end position on the surface-layer is pressed, the roll-end is firmly adhered, an inferior-product rate after baking is reduced, and height difference between the surface layer and the layer beneath thereof is not crushed, so that a post-baked form can be made as an appropriate form such as a croissant-like form.

### BRIEF DESCRIPTION OF THE DRAWINGS

FIG. 1 shows the production steps for dent-formed shaped frozen bread dough of the present invention.
FIG. 2 shows a side view of the shaped bread dough.
FIG. 3 shows a schematic diagram (side view) of step 7 (pressing step).
FIG. 4 shows a side view of the dent-formed shaped bread dough.
FIG. 5 is a photograph showing post-baked dent-formed shaped frozen bread dough on which a dent is made with a length of 50 mm and a depth of 20 mm.

### DETAILED DESCRIPTION OF THE INVENTION

### [Best Mode for Carrying Out the Present Invention]

Shape-processed frozen bread dough used in the present invention is a flour-processed product having a dent on the surface, which forms a continuous, multi-layered structure composed of the dough containing bread yeast and an oil-and-fat composition (roll in oil-and-fat).

The bread dough containing bread yeast includes wheat flour as a main raw material and other auxiliary raw materials such as bread yeast, salt, sugars, oil-and-fat (shortening, margarine, butter, and the like), dairy products, eggs, water, and the like. Any kind of wheat flour may be used and its protein content may be large or small. Instead of the wheat flour, flour of cereals other than wheat such as barley, rye, rice and the like may be used. The flour of cereals other than wheat and the wheat flour may be mixed. The moisture content of the bread dough is preferably 5 to 40%.

The oil-and-fat composition (roll in oil-and-fat) is not particularly limited as long as it is edible oil-and-fat used for common oil-and-fat processed food. Natural oil such as vegetable oil, animal oil, milk fat and the like, hydrogenation oil thereof, interesterified oil and the like may be used singly or as blended oil thereof. The fat content of the bread dough is preferably 20% to 80% by weight.

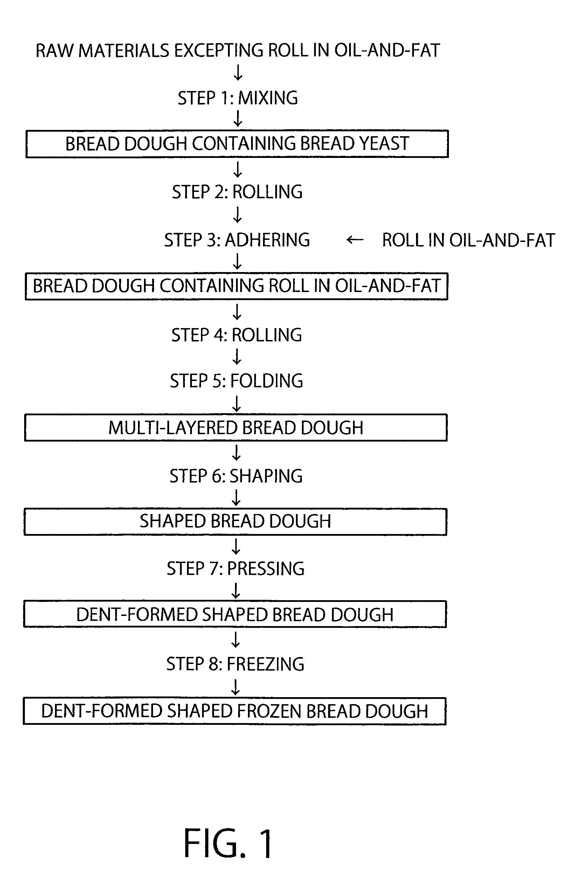

A production step of dent-formed shaped frozen bread dough is shown in FIG. 1.
The continuous, multi-layered structure composed of the bread dough containing the bread yeast and the oil-and-fat composition (roll in oil-and-fat) is obtained by the following steps: the bread dough containing the bread yeast except the oil-and-fat is mixed (the step 1); the obtained bread dough is rolled into a sheet-like form (the step 2); the oil-and-fat composition is adhered on the obtained sheet-like bread dough and the resultant sheet is folded in half with the oil-and-fat inside to form bread dough folded with oil-and-fat is obtained (the step 3). Furthermore, the bread dough folded with oil-and-fat is rolled and folded repeatedly 2 to 5 times, and thus sheet-like multi-layered bread dough with 8 (=2³) to 64 (=2⁶) layers is obtained (the steps 4 and 5).

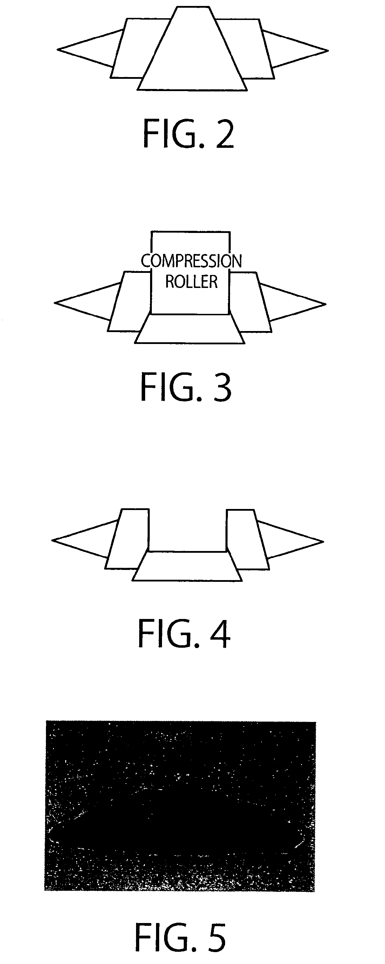

The sheet-like multi-layered bread dough is cut into a desired form. Then the cut bread dough is shaped by bend-shaping, fold-shaping, or roll-shaping to obtain shaped bread dough (the step 6). Alternatively, the shaped bread dough may be prepared by bending and folding bread dough having the sheet-like multi-layered structure in advance, and then the prepared dough may be cut into a desired size. When making croissant, the bread dough is cut into a triangular form and the cut bread dough is rolled from the base as an axis to make a cylindrical form, and the shaped bread dough is obtained in which the length of the thickest portion is shorter than the whole longitudinal length (FIG. 2).

A specific portion of the surface of the thickest portion of the shaped bread dough is pressed using a compression roller and the like (FIG. 3) to obtain dent-formed shaped bread dough (the step 7, FIG. 4). The dent is preferably formed as occupying 13% to 70% of the longitudinal length of the shaped bread dough including the thickest portion.

The dent length may be adjusted based on a form of and a size of the shaped bread dough. The length is preferably 13% to 70% of the longitudinal length of the original form, more preferably between 35% and 70%. When making croissant, there are merits such that: the thickest portion of the dough is pressed and thinned so that heat transfer becomes large and the post-baked volume becomes large; since the dough is pressed at the roll-end portion, this portion is firmly adhered so that the surface-layer peeling-off during baking is prevented and an inferior-product rate is reduced; since the thin portion is not pressed, different heights on the roll are not collapsed and the post-baked form becomes a croissant-like form. The dent depth may be freely adjusted based on a compression stress. The dent is preferably pressed to the depth which is 33% to 90% of the depth of the thickest portion before making the dent, more preferably, 83% to 90% thereof. The dent may be made anywhere on the surface, but it may particularly be made on the top face portion.

The dent-formed shaped frozen bread dough is obtained by freezing the dent-formed shaped bread dough below -20°C (the step 8). The dent-formed shaped bread dough is preferably frozen as soon as possible after shaping the dent.

The shape-processed frozen bread dough having the dent on the surface does not require thawing time and fermentation time. Bread having a good appearance and freshly baked texture, taste, and flavor can be obtained by baking and heating the dough. As a method for baking and heating, a heating method based on a convective heat transfer with circulating atmosphere is preferably used. A radiant heat transfer or a heating method combining the radiant heat transfer with the convective heat transfer may also be used. The heating temperature is 100°C or more, preferably 120°C to 230°C. Although the heating can be carried out even at temperatures higher than 230°C, a specific volume of the bread tends to decrease. By adding steam (water vapor) to inside of the baking device during baking, the bread volume can be increased due to heat radiation from water vapor and the water vapor condensation onto the frozen bread dough. The steam may be added anytime during baking, preferably between the start time of the baking and one-third of the whole baking time. The steam may be pre-added before baking.

### EXAMPLES

The present invention will be described hereafter with reference to the following examples, while the present invention shall not be limited to the examples.

### [Example 1]

Shaped frozen bread dough was produced based on the formulation of raw materials shown in Table 1 and the production steps shown in FIG. 1. The bread was evaluated after baking. Among the raw materials shown in Table 1, the raw materials except the roll in oil-and-fat were mixed using a mixer (KANTO KONGOKI INDUSTRIAL Co., Ltd: vertical mixer, type-SS 111) for 5 minutes at low-speed rotation, 6 minutes at middle-speed rotation, and 0.5 minutes at high-speed rotation. (The dough temperature was 15°C at the end of the mixing.) The obtained bread dough containing bread yeast was rolled to a sheet-like form having a thickness of 10 mm using Reverse Sheeter (Kamata Kikai Seisakusho: Reverse Sheeter KR430Y). Then the roll in oil-and-fat was adhered on the sheet-like dough. The resultant sheet was folded in half by bringing one end of the dough to the opposite end with the oil-and-fat sides facing each other.

**[Table 1]**

| Raw material | Manufacturer | Content (flour basis %) |
|---|---|---|
| Wheat flour (Strong flour) | Nisshin Flour Milling Inc. | 90 |
| Wheat flour (flour for French bread) | THE TORIGOE CO., LTD. | 10 |
| Oil-and-fat (Shortening) | ADEKA CORPORATION | 4 |
| Bread yeast | Oriental Yeast Co., Ltd. | 4 |
| Suger | Hokkaido Suger Co., Ltd. | 3 |
| Salt | Naikai Salt Industries Co., Ltd | 1.6 |
| Dough improver | Puratos Japan Co., Ltd. | 1 |
| Water | | 55 |
| Roll in oil-and-fat | ADEKA CORPORATION | 50.6 |

The obtained bread dough folded with oil-and-fat was threefold-layered and rolled using Reverse Sheeter. Further, the obtained bread dough was fourfold-layered and rolled using the Reverse Sheeter, and then a sheet-like multi-layered bread dough (24-layered dough) having a thickness of 5 mm was obtained.

The obtained multi-layered bread dough was divided into pieces having a triangular form with 60 g (the base was 125 mm and the height was 135 mm), and the triangular form was rolled along the base as an axis to obtain shaped bread dough (the thickest portion was 40 mm) having a cylindrical form. A portion of the dough including the thickest portion of the shaped dough and extending 15 mm at both sides thereof (namely a length of 30 mm centered around the thickest portion) was pressed only at the middle part of a plane covering the roll-end portion by a compression roller to form a dent having a depth of 15 mm, yielding dent-formed shaped bread dough.

The obtained dent-formed shaped bread dough was frozen for 40 minutes using a freezer (FUKUSHIMA INDUSTRIES CORP.: freezer, EXD-22FM7: the temperature was -30°C) to obtain dent-formed shaped frozen bread dough.

The dent-formed shaped frozen bread dough was baked for 26 minutes in an oven (Kitazawasangyo Corporation: convection oven, PALUX AG 606324: the temperature was 160°C) to make baked bread. The baked bread was left at room temperature until the product temperature went down to room temperature (24°C), and subjected to an evaluation. The evaluation results are shown in Table 2.

**[Table 2]**

| | | Control group | Test group |
|---|---|---|---|
| Appearance | Specific volume(mL/g) | 5.01 | 6.11 |
| | Inferior-product rate for appearance*¹ (%) | 33% | 0% |
| Texture | | • The surface is hard. | • Having a moderate elasticity and crispiness. |
| | | • Melting texture in the mouth is insufficient. | • Melting texture in the mouth is good. |

| | | | |
|---|---|---|---|
| *1:peeling occurrence rate of the product surface portion (occurrence number/the whole number) | | | |

The shaped frozen bread dough prepared without a dent-forming step was referred to as a control group. In the control group, an inferior-product rate for poor appearance, in which the surface layer of the thickest portion peeled off, increased and the texture became harder. On the other hand, the dent-formed shaped frozen bread dough (referred to as a test group), had a specific volume of baked bread larger than that of the control group, texture was described as having a moderate elasticity, crispiness and melting texture in the mouth, and the taste was described as favorable with no unusual flavor in the aftertaste. The surface layer did not peel off and the appearance was also favorable.

### [Example 2]

The dent shaped frozen bread dough was produced based on the formulation of raw materials shown in Table 3 and the production steps shown in FIG. 1. The bread was evaluated after baking. Among the raw materials shown in Table 3, the raw materials except shortening and roll in oil-and-fat were mixed using a mixer (KANTO KONGOKI INDUSTRIAL Co., Ltd: vertical mixer, type-SS 111) for 3.5 minutes at low-speed rotation, 6 minutes at middle-speed rotation, and 1 minute at high-speed rotation. After adding the shortening, the material was further mixed for 4 minutes at low-speed rotation, 2 minutes at middle-speed rotation, and 30 seconds at high-speed rotation. (The dough temperature was 15°C at the end of the mixing.) The obtained bread dough containing bread yeast was rolled to a sheet-like form having a thickness of 10 mm using Reverse Sheeter (Kamata Kikai Seisakusho: Reverse Sheeter KR430Y). Then the roll in oil-and-fat was adhered on the sheet-like dough. The resultant sheet was folded in half by bringing one end of the dough to the opposite end with the oil-and-fat sides facing each other.

**[Table 3]**

| Raw material | Manufacturer | Content (flour basis %) |
|---|---|---|
| Wheat flour (Strong flour) | Nisshin Seifun Group Inc. (Holding Company) | 100 |
| Oil-and-fat (Shortening) | ADEKA CORPORATION | 10 |
| Suger | Hokkaido Suger Co., Ltd. | 9.5 |
| Bread Yeast | Oriental Yeast Co., Ltd. | 6 |
| Dugh improver | Puratos Japan Co., Ltd. | 3 |
| Salt | Naikai Salt Industries Co., Ltd | 1.8 |
| Water | | 57 |
| Roll in oil-and-fat | ADEKA CORPORATION | 56.2 |

The obtained bread dough folded with oil-and-fat was threefold-layered and rolled using Reverse Sheeter. Further, the obtained bread dough was fourfold-layered and rolled using the Reverse Sheeter, and then a sheet-like multi-layered bread dough (24-layered dough) having a thickness of 4 mm was obtained.

The obtained multi-layered bread dough was divided into pieces having a triangular form with 45 g (the base was 125 mm and the height was 135 mm), and the triangular form was rolled along the base as an axis to obtain shaped bread dough (the longitudinal length was 115 mm and the thickest-portion height was 30 mm) having a rolled cylindrical form. A portion of the dough including the thickest portion of the shaped dough and extending 15 mm at both sides thereof (the ratio of the length to the longitudinal length of 13%) was pressed only at the middle part of a plane covering the roll-end portion by a compression roller to form a dent having a depth of 27 mm, yielding dent-formed shaped bread dough.

In the similar way, by changing the length to be pressed to 30 mm (the ratio of the length to the longitudinal length of 26%), 40 mm (the ratio of the length to the longitudinal length of 35%), 50 mm (the ratio of the length to the longitudinal length of 43%), 60 mm (the ratio of the length to the longitudinal length of 52%), and 80 mm (the ratio of the length to the longitudinal length of 70%), different forms of dent-formed shaped bread dough having dent with the depth of 27 mm (the ratio of the dent to the thickest portion of 90%), 25 mm (the ratio of the dent to the thickest portion of 83%), 20 mm (the ratio of the dent to the thickest portion of 67%), 15 mm (the ratio of the dent to the thickest portion of 50%), and 10 mm (the ratio of the dent to the thickest portion of 33%) were obtained.

The obtained dent-formed shaped bread dough was frozen for 40 minutes using a freezer (FUKUSHIMA INDUSTRIES CORP.: freezer EXD-22FM7: the temperature was -30°C) to obtain dent-formed shaped frozen bread dough.

The dent-formed shaped frozen bread dough was baked for 26 minutes in an oven (Kitazawasangyo Corporation: convection oven, PALUX AG 606324: the temperature was 160°C) to make baked bread.

The baked bread was left at room temperature until the product temperature went down to room temperature (24°C) and subjected to an evaluation. The evaluation results are shown in Table 4.

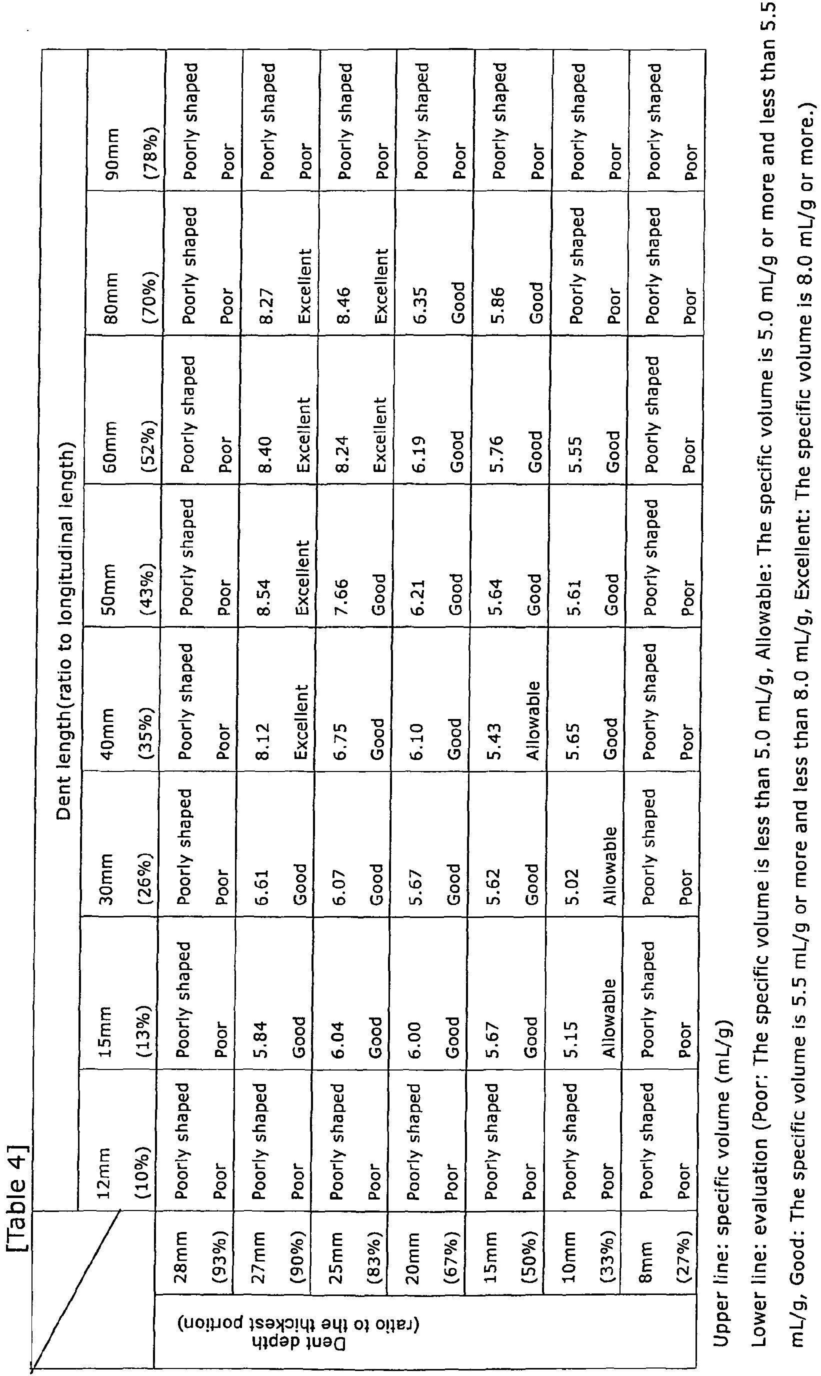

The qualities of the specific volume and the appearance of the baked bread were evaluated. The results showed that the favorable length to be pressed was from 15 mm (the ratio of the length to the longitudinal length was 13%) to 80 mm (the ratio of the length to the longitudinal length was 70%). More specifically, the best results were obtained with the length of 40 mm (the ratio of the length to the longitudinal length was 35%) to 80 mm (the ratio of the length to the longitudinal length was 70%).

The favorable depth of the dent was from 10 mm (the ratio of the dent to the thickest portion was 33%) to 27 mm (the ratio of the dent to the thickest portion was 90%). More specifically, the best results were obtained with the depth of the dent of 25 mm (the ratio of the dent to the thickest portion was 83%) to 27 mm (the ratio of the dent to the thickest portion was 90%).

FIG. 5 shows a photograph of baked dent-formed shaped frozen bread dough on which a dent with the length of 50 mm and the depth of 20 mm is formed originally.

### [Industrial Applicability]

According to the present invention, the baked bread with favorable fresh-baked qualities (with moderate elasticity, crispiness, no unusual flavor, and no surface-layer peeling off) can be prepared by a baking (heating) step only without requiring a thawing step and a fermentation step. Thus, the present invention is useful in a food service industrial field where a thawing facility or a fermentation facility cannot be installed due to a problem of cuisine space. The present invention is useful also in an industrial catering field or a medical catering field such as a feeding facility in a business office or a feeding facility in a hospital and the like, because it can be prepared and cooked also in a kitchen where a freezer and an oven are permanently installed. The present invention is also useful at home which has a microwave oven with oven function.

## Claims

1. A method for producing frozen bread dough, comprising:
preparing a dough having a continuous, multilayered structure by using a cereal flour composition containing yeast and an oil-and-fat composition (roll in oil-and-fat);
shaping the dough to a desired form; and
forming a dent on the surface of the shaped dough at the thickest portion.

2. The method for producing the frozen bread dough according to claim 1, wherein the longitudinal length of the dent formed by pressing the dough surface is from 13% to 70% of the longitudinal length of the shaped dough.

3. The method for producing the frozen bread dough according to claim 2, wherein the depth of the dent of the shaped dough is from 33% to 90% of the thickest portion before forming the dent.

4. The method for producing the frozen bread dough according to claim 3, wherein the frozen bread dough is croissant dough.
